(19) **Europäisches Patentamt**
**European Patent Office**
**Office européen des brevets**

(11) **EP 1 742 981 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(51) Int Cl.:
**C08G 63/78** (2006.01)     **C08G 63/80** (2006.01)
**C08G 63/88** (2006.01)     **B65D 1/02** (2006.01)

(21) Anmeldenummer: **04739284.0**

(86) Internationale Anmeldenummer:
**PCT/EP2004/005462**

(22) Anmeldetag: **21.05.2004**

(87) Internationale Veröffentlichungsnummer:
**WO 2005/092949 (06.10.2005 Gazette 2005/40)**

(54) **VERFAHREN ZUR HERSTELLUNG VON HOCHKONDENSIERTEM POLYESTERGRANULAT**

METHOD FOR THE PRODUCTION OF HIGHLY CONDENSED POLYESTER GRANULATE

PROCEDE DE PRODUCTION DE GRANULAT DE POLYESTER HAUTEMENT CONDENSE

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.03.2004 DE 102004015515**

(43) Veröffentlichungstag der Anmeldung:
**17.01.2007 Patentblatt 2007/03**

(73) Patentinhaber: **Lurgi Zimmer GmbH**
**60295 Frankfurt am Main (DE)**

(72) Erfinder:
- **OTTO, Brigitta**
  **14715 Milow (DE)**
- **BACHMANN, Holger**
  **64331 Weiterstadt (DE)**
- **SCHÄFER, Roland**
  **63755 Alzenau (DE)**

(74) Vertreter: **Meyer-Dulheuer, Karl-Hermann et al**
**Dr. Meyer- Dulheuer & Partner**
**Patentanwaltskanzlei**
**Mainzer-Landstrasse 69-71**
**60329 Frankfurt am Main (DE)**

(56) Entgegenhaltungen:
**EP-A- 0 661 326      EP-A- 0 752 302**
**WO-A1-2004/018541   WO-A1-2005/085318**
**US-A- 3 860 564      US-A- 4 223 128**
**US-A- 5 362 844      US-A- 6 160 085**
**US-B1- 6 461 575**

- **DATABASE WPI Section Ch, Week 198512 Derwent Publications Ltd., London, GB; Class A23, AN 1985-071723 XP002305338 & JP 60 026026 A (TOYOBO KK) 8. Februar 1985 (1985-02-08)**
- **HARRY K. Y. & AL: "Transitions and relaxations of linear polyesters realted to poly(ethylene terephthalate)" JOURNAL OF APPLIED POLYMER SC, Bd. 20, 1976, Seiten 1209-1215, XP002305336**
- **TODA T. & AL: "Structure and molecular motion changes in poly (ethylene terephthalate) induced by annealing under dry and wet conditions" POLYMER, Bd. 36, Nr. 4, 1995, Seiten 699-706, XP002305337**

Bemerkungen:
Die Akte enthält technische Angaben, die nach dem Eingang der Anmeldung eingereicht wurden und die nicht in dieser Patentschrift enthalten sind.

EP 1 742 981 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft latentwärmekristallisierte Polyester und Copolyester sowie deren Verwendung zum Herstellen von Polyesterformkörpem.

Die bekannten aromatischen Polyester oder Copolyester, insbesondere Polyethylenterephthalat und dessen Copolymere mit geringen Anteilen von beispielsweise Isophthalsäure oder Cyclohexandimethanol, Polybutylenterephthalat und deren Copolyestern, Polytrimethylenterephthalat, Polyethylennaphthalat und deren Copolyestern, die als Ausgangsmaterial für Fasern, Filme, Folien und Verpackungen dienen, werden nach einer Schmelzepolykondensation zu Granulaten mittlerer Viskosität verarbeitet. Zur Beschreibung der vorliegenden Erfindung werden alle diese Polyester und Copolyester allgemein als Polyester bezeichnet.

Der mittlere Polykondensationsgrad, ausgedrückt in der Intrinsischen Viskosität (I.V.), bewegt sich bei Polyethylenterephthalat und seinen entsprechend niedrig modifizierten Copolyestern nach der Schmelzepolykondensatitin im Bereich zwischen 0,30 - 0,90 dl/g. Es handelt sich hierbei um teilkristallines Granulat mit Kristallisationsgraden bis zu 9 %. Da die Herstellung von Granulaten mit einer I.V. über 0,65 dl/g, insbesondere in konventionellen Autoklaven, kaum möglich ist und hohe Viskositäten > 0,80 dl/g eine wesentliche Kapazitätseinschränkung in der Schmelzepolykondensation nach sich ziehen und außerdem die Polyester für Lebensmittelverpackungen einen sehr niedrigen Acetaldehydgehalt erfordern, wird nach dem Stand der Technik eine Festphasenpolykondensation ("solid state polycondensation", SSP) mit vorangestellter Kristallisation angeschlossen, die zu einer Erhöhung der I.V. im allgemeinen um 0,05 - 0,4 dl/g und zu einer Absenkung des Acetaldehydgehaltes von etwa 25 - 100 ppm auf Werte unter 1 ppm im PET (Polyethylenterephthalat) führt. Die dem eigentlichen SSP-Reaktor vorangehenden Vor- und Kristallisationsreaktoren dienen vor allem dazu, Verklebungen der Granulate untereinander im SSP-Reaktor zu vermeiden. Der Kristallisationsgrad wird auf Werte zwischen 40 - 52 % nach den Kristallisationsstufen angehoben, bei unwesentlich veränderter I.V. und unter Verringerung des Acetaldehydgehaltes auf unter 10 ppm. Der Kristallisationsprozess findet von außen nach innen statt. Die Kristallinität ist folglich in den Randbereichen der Teilchen größer als in der Mitte der Teilchen.

Im SSP-Reaktor wird die mittlere Viskosität derart angehoben, dass die für das entsprechende Anwendungsgebiet notwendigen Festigkeiten erreicht werden, der Acetaldehydgehalt bei Lebensmittelverpackungen entsprechend den Anforderungen abgesenkt und der austretende Oligomerenanteil auf ein Mindestmass reduziert wird. Es ist ebenfalls wichtig, dass der noch als Vinylester gebundene Acetaldehyd, auch als Depotaldehyd bezeichnet, soweit abgebaut wird, dass bei der Verarbeitung des Polyestergranulates zu Verpackungen, insbesondere zu Polyesterflaschen nach dem Streckblas- und Spritzstreckblasverfahren im Polyester nur eine minimale Acetaldehydmenge nachgebildet wird.

Verarbeiter dieses Granulates sind vor allem Hersteller von Hohlkörpern. Häufig werden in nach dem Spritzgußverfahren arbeitenden Preformmaschinen Vorformlinge, sogenannte Preforms, hergestellt, aus denen wiederum in einem weiteren Schritt Polyesterflaschen in einem Blasformverfahren produziert werden. Auch andere Formgebungen für Polyestergranulat, beispielsweise in Maschinen zur Film- und Folienherstellung sind möglich.

Für die Granulierung von Kunststoffen ist zum Beispiel das Verfahren der Stranggranulation in den Markt eingeführt. Dieses Verfahren zeichnet sich dadurch aus, dass in kontinuierlicher Betriebsweise relativ lange Kunststoffstränge durch eine Lochplatte gepresst und anschließend frei hängend nach einer kurzen Transportstrecke durch Luft durch ein Wasserbad hindurchgeleitet werden. Wegen der geringen Oberfläche eines Kunststoffstranges im Vergleich zum Granulat kann hierbei eine Wasseraufnahme in engen Grenzen gehalten werden. Die abgekühlten Stränge werden getrocknet und einem Granulator zugeführt. Bei diesem Verfahren erfolgt die Granulierung im festen Zustand. Im Anschluss daran findet üblicherweise eine nochmalige Trocknung statt, beschrieben beispielsweise in DE 43 14 162 oder im Kunststoffihandbuch. Bei Nutzung dieses.Granulierverfahrens ist die Möglichkeit einer starken punktuellen Temperaturerhöhung im Strang und somit erhöhter Abbauerscheinungen im Polymer und ungleichmäßigen Kristallisationsgrade von Chip zu Chip sehr groß. Bei dieser Technologie findet die Abkühlung im Chip von außen nach innen statt

Eine weitere Möglichkeit der Granulierung von Polymerschmelze nach der Polykondensation ist heute vor allem die Unterwassergranulation, wobei die Schmelze direkt nach Austritt aus Düsen / Lochplatten des Granulators in einer anschließenden Wasserkammer mit Schneidmessern abgetrennt wird. Die abgetrennten Granulate sind noch plastisch und verformen sich durch die Oberflächenspannung beim Abschrecken im kalten Wasser, wobei die Abkühlung ebenfalls von außen nach innen stattfindet und nehmen eine annähernd runde bis linsenförmige Kontur an. Die abgekühlten Granulate werden mit dem Wasserstrom in einem Wasserabscheider von diesem getrennt und getrocknet und dann in Big Bags verpackt oder in Silos zur Weiterverarbeitung gefördert (DE 35 41 500, DE 199 14 116, EP 0 432 427, DE 37 02 841). Dieses Verfahren zeichnet sich durch das Prinzip der Trocknung durch Eigenwärme aus.

Die auf diese Weise hergestellten Chips weisen einen gleichmäßigen Kristallisationsgrad unter 10 % auf.

In US 4,436,782 wird wiederum ein Verfahren zur Granulierung und Weiterbehandlung von PET zu Pellets beschrieben, in dem bei Temperaturen zwischen 260 °C und 280 °C ein Oligomerengemisch der Viskosität von 0,08 - 0,15 durch Düsen gepresst wird, so dass Tropfen entstehen, die durch einen Kühlbereich mit Inertgasatmosphere in ein Wasserbad oder auf ein Transportband fallen und die Tropfen zu amorphen Pellets erstarren. Auch in diesem Verfahren entstehen Pellets mit einem hohen Anteil amorpher Strukturen.

Bei allen beschriebenen Verfahren werden Granulate mit niedrigem Kristallisationsgrad, üblicherweise unterhalb 12 %, erhalten. Um die Kristallinität der polymeren Granulate zum Beispiel als Vorstufe zur SSP zu erhöhen, sind bekanntermaßen kostenintensive Reaktionsstufen notwendig. Hohe Betriebskosten entstehen unter anderem dadurch, daß die mit Umgebungstemperatur ankommenden Granulate zuerst auf die Kristallisationstemperatur aufgeheizt werden müssen.

In WO 01/81450 wird ein Verfahren und Vorrichtung zur Vertropfung von Vorprodukten thermoplastischer Polyester und Copolyester beschrieben, der den Nachteil der oben beschriebenen Granulierverfahren die Kristallinität betreffend überwindet, eine Verfahrensverkürzung herkömmlicher Granulierverfahren beschreibt und auf bisher bekannten Verfahrensschritten und Vorrichtungen aufbaut, um oberflächenkristallisierte, vertropfte Vorprodukte in Form von Monomeren, Oligomeren, Monomer-Glykolgemischen oder von teilweise polykondensierten Materialien herzustellen. Dazu wird das Produkt in ein gasförmiges Medium eingebracht, wobei das gasförmige Medium nach dem Eintritt des vertropften Vorproduktes in das gasförmige Medium den Kristallisationsvorgang des Vorproduktes beschleunigt und den Kristallisafionszustand beschleunigt herbeiführt, indem es das vertropfte Vorprodukt auf einer Temperatur > 100 °C und unter seinem Schmelzpunkt für einen begrenzten Zeitraum hält, bis eine ausreichende Kristallisation in der Oberfläche des Tropfens abgeschlossen ist. Auch hier liegt also eine stärker kristallisierte Außenschicht vor. Damit wird eine nicht klebende Oberfläche erhalten, die eine unmittelbare Weiterbehandlung zu hochpolymerem Polykondensat verspricht. Ein derart hergestelltes Material hält den notwendigen mechanischen Belastungen nur bedingt stand. Die Sprödigkeit gegenüber einem amorphen Chips nimmt zu. Ein weiterer Nachteil dieser Kristallinitätserzeugung im niedrigmolekularen Bereich ist ein nach der abgeschlossenen SSP vollkommen durchkristallisierter Chip mit starr ausgerichteten Kristallstruktuten, zu deren Zerstörung während des Aufschmelzvorganges bei der Herstellung beispielsweise von Preforms im Spritzgießverfahren ungleich höhere Energie aufgewendet werden muß. Durch die notwendige hohe Aufschmelztemperatur von mindestens etwa 300 °C steigt die Acetaldehydreformation in den Preforms stark an und die Qualität verschlechtert sich, vor allem auch durch verstärkte Abbaureaktionen. Außerdem besteht die Gefahr, dass der Ablauf der SSP durch die Unbeweglichkeit der Kettenenden beim Ansteigen der Viskosität behindert oder sogar gestoppt wird.

Ein weiteres Granulierverfahren zur Herstellung von kristallisierten Chips während des Granulationsprozesses wird in WO 01/05566 beschrieben. Schmelzeflüssige, aus Düsen austretende Kunststoffstränge werden unmittelbar in einem temperierten flüssigen Medium auf einer Kristallisationsstrecke teilkristallisiert, wobei in diesem flüssigen Medium Temperaturen über der Glasübergangstemperatur der Kunststoffstränge gehalten werden. Im Anschluß an die Kristallisationsstrecke folgt die Granuliervorrichtung. Durch die Kristallisation im Mantel des Kunststoffes ist eine ausreichende Festigkeit vorhanden, um anschließend nach kurzer Temperierungsstrecke in der Granulieranlage ohne vorherige Trocknung die Kunststoffstränge zu Pellets zu zerteilen. Auch hier liegt also eine stärker kristallisierte Außenschicht vor. Nachteilig ist, dass nach der Granulierung der Kunststoffe ein Gemisch aus Granulat und flüssigem Medium vorliegt, und somit mit bekannten Mitteln eine Trocknung der Granulate vorgenommen werden muss.

Weiterhin wird in einer noch nicht veröffentlichten deutschen Patentanmeldung, Aktenzeichen DE 103 49 016, "Verfahren zur Herstellung von Kunststoffgranulat", beschrieben, dass direkt nach einer Unterwassergranulation die gerade hergestellten Pellets sehr schnell vom Wasser befreit werden und unter Nutzung der Eigenwärme trocknen und kristallisieren. Um ein Verkleben der Chips zu vermeiden, werden die Pellets unmittelbar nach dem Abschleudern des Wassers über einen Vibrations- oder Schwingförderer nach einer ausreichenden Verweildauer zu einer nachgeschalteten Abfüllanlage oder einer Weiterverarbeitungsanlage gefördert. Mit dieser Technologie erfolgt der Kristallisationsvorgang von innen nach außen im Pellet, womit eine gleichmäßigere Kristallisation über den Durchmesser des Granulates erreicht wird.

Ein solches Verfahren wird im Folgenden als Latentwärmekristallisationsverfahren bezeichnet. Neben dem in DE 103 49 016 beschriebenen Verfahren werden unter Latentwärmekristallisationsverfahren aber auch alle übrigen Verfahren verstanden, bei denen die Kristallisation ausschließlich unter Nutzung der Eigenwärme aus dem Schmelzezustand des Polymers erfolgt. Dies bedeutet, daß den Pellets zwischen der Granulation und der nachgeschalteten Abfüllanlage oder Weiterverarbeitungsanlage keine Wärme von außen zugeführt wird. Die Vermeidung einer Wärmezufuhr von außen erfordert, daß alle die Pellets berührenden Medien entweder die gleiche oder eine niedrigere Temperatur als die aktuelle Pelletoberfläche aufweisen müssen. Ist die Temperatur dieser Medien jedoch zu niedrig, so wird den Pellets zuviel Wärme entzogen und die gewünschte Latentwärmekristallisation kann nicht mehr in ausreichendem Maß stattfinden. Die grundlegenden Verfahrensprinzipien können der DE 103 49 016 entnommen werden.

Ein aus einem Latentwärmekristallisationsverfahren erhaltenes Granulat kann sehr unterschiedliche Eigenschaften aufweisen. Diese hängen außer von den Betriebsbedingungen im Latentwärmekristallisationsverfahren selbst auch von den Eigenschaften der Polymerschmelze, im Falle von Polyestern beispielsweise vom Polymerisationsgrad, der intrinsischen Viskosität (I.V.) und dem Acetaldehydgehalt ab. Die geforderten Eigenschaften werden maßgeblich vom beabsichtigten Verwendungszweck des latentwärmekristallisierten Granulates bestimmt, da sie direkte Auswirkungen auf die nachfolgenden Verarbeitungsschritte haben.

Der Erfindung liegt daher die Aufgabe zugrunde, Granulate aus hochviskosen aromatischen Polyestern und deren Copolymeren zur Verfügung zu stellen, die sich mit geringen Investitions- und Betriebskosten herstellen lassen, für die problemlose Weiterverarbeitung zu Hohlkörpern geeignet sind und gleichzeitig die besonders hohen Qualitätsansprüche an den Polyester für Hohlkörper, insbesondere für Behälter für die Abfüllung für Lebensmittel und hier insbesondere für Getränkeflaschen, erfüllen.

Diese Aufgabe wird erfindungsgemäß gelöst durch ein Verfahren zur kontinuierlichen oder diskontinuierlichen Herstellung von Polyestern in einem Schmelzepolykondensationsreaktor für die Herstellung von hohen Intrinsischen Viskositäten, dem schonenden Weitertransport der Schmelze zu einem Granulator, in dem mittels Latentwärmekristallisationsverfahren ein Granulat mit einem Kristallisationsgrad > 38 % erzeugt wird.

Als nachfolgende Verarbeitungsschritte kommen alle Verfahren in Betracht, in denen Polyestergranulate eingesetzt werden. Dies können neben der bereits beschriebenen Festphasenpolykondensation (SSP) auch Verfahren sein, die hauptsächlich zur Entaldehydisierung von Polyestergranulat mit einer bereits ausreichend hohen I.V. dienen (Festphasendealdehydisierung, DAH) oder auch Verformungsverfahren, in denen beispielsweise Vorformlinge für die Herstellung von Lebensmittelverpackungen, sogenannte Preforms, direkt aus dem Granulat hergestellt werden. Im letztgenannten Verfahren muß das Granulat bereits direkt nach der Latentwärmekristallisation die für die Verformung notwendige I.V. und den geforderten Acetaldehydgehalt aufweisen.

Dieses Granulat kann ohne Auftreten von Verklebungen entweder

A. ohne vorherige Additivierung und ohne weitere Abkühlung direkt in einen Festphasenpolykondensationsreaktor gefördert und auf eine höhere Viskosität aufkondensiert und entaldehydisiert werden oder

B. ohne vorherige Additivierung das Granulat einer Dealdehydisierung zugeführt und anschließend der Verarbeitung zu Hohlkörpern zugeführt werden oder

C. direkt in der Vorformlingsherstellung zur Herstellung von Hohlkörpern eingesetzt werden, wobei vor und/oder nach dem Polykondensationsreaktor Additive, zum Beispiel Thermostabilisatoren und/oder Acetaldehydreduzierende Additive zugemischt werden.

Überraschenderweise wurde gefunden, daß sich latentwärmekristallisierte Granulate für alle genannten Weiterverarbeitungsverfahren besonders gut eignen, wenn die an einem Lichtmikroskop im Polarisationskontrast sichtbaren Mikrostruktureinheiten, sogenannte Sphärolite, im Randbereich, d. h. der äußersten Schicht der Teilchen deutlich kleiner sind als in der Probenmitte, d. h. dem Zentrum der Teilchen. Dies ist auf Mikrofotos, die unter den genannten Bedingungen aufgenommen werden, gut zu erkennen (siehe Beispiele). Die Sphärolithe in der Probenmitte haben meist einen maximalen Durchmesser von 20 $\mu$m, oftmals deutlich weniger.

Latentwärmekristallisierte Granulate für alle genannten Weiterverarbeitungsverfahren eignen sich überraschenderweise auch gut, wenn im Randbereich der Kristallisationsgrad gleichgroß oder sogar niedriger als in der Probenmitte ist.

Das vorliegende Verfahren ist geeignet zur Herstellung von Granulaten aromatischer Polyester oder Copolyester mit bestimmtem Kristallinitätsgrad, erhältlich aus einer oder mehreren Dicarbonsäuren bzw. deren Methylestern, wie beispielsweise Terephthalsäure, Isophthalsäure, Naphthalindicarbonsäure, 4,4-Bisphenyldicarbonsäure und/oder Dimethylterephthalat und einem oder mehrerer Diole, wie Ethylenglykol, Neopentylglykol und/oder Diethylenglykol.

Diese Ausgangsverbindungen können in an sich bekannter Weise nach dem kontinuierlichen oder diskontinuierlichem Verfahren der Ver- oder Umesterung unter Verwendung von bekannten Katalysatoren mit einer sich anschließenden Polykondensation unter Vakuum zu einer hochviskosen Polyesterschmelze verarbeitet und anschließend nach einem modifizierten Granulationsverfahren granuliert und gleichzeitig kristallisiert werden.

Bei der Latentwärmekristallisation wird die in der Polyesterschmelze vorhandene Eigenwärme zur Kristallisation des Granulates genutzt. Zur Erzielung eines bestimmten Kristallisationsgrades ist entscheidend, dass der Wärmeverlust des in der Schmelzephase erzeugten Granulates bei Transport und Trocknung durch entsprechende Maßnahmen niedrig gehalten wird. Das erfindungsgemäße Produkt der Latentwärmekristallisation hat einen Kristallisationsgrad von mindestens 38%, bevorzugt 38 bis 60 %, besonders bevorzugt 42 bis 55 %. Seine Schmelzeenthalpie ("heat of fusion", HOF) liegt unter 60 kJ/kg, bevorzugt unter 55 kJ/kg. Da die Kristallisation vom Kem zum Mantel innerhalb des Pellets stattfindet und damit die übliche hohe exotherme Wärmeentwicklung während der Kristallisation, die in den üblichen Kristallisafionsverfahren stattfindet und zur unerwünschten Agglomeration des Granulates führt, nicht auftritt, verkleben die Granulate untereinander bei der erfindungsgemäßen Verwendung in den nachfolgenden Verarbeitungsschritten nicht.

Das auf die beschriebene Weise erzeugte latentwärmekristallisierte Polyestergranulat wird entsprechend der Technologie der vorgeschalteten Polykondensationsanlage weiterverarbeitet.

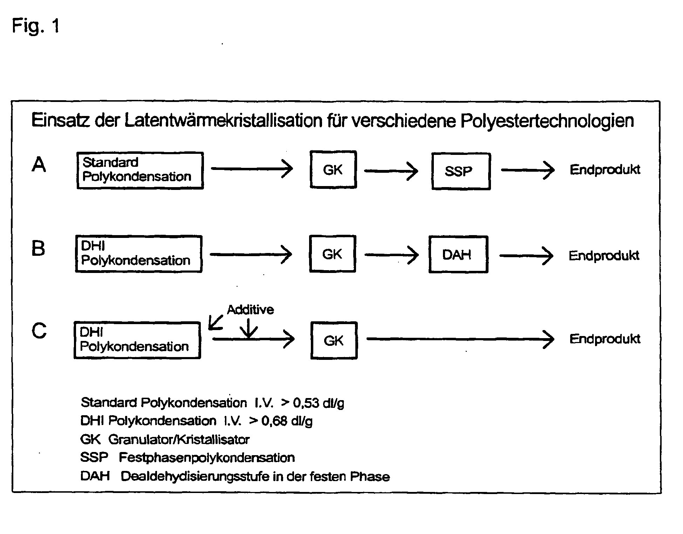

Fig. 1 zeigt die Einsatzmöglichkeiten der Latentwärmekristallisation in verschiedenen Potyestertechnologien.

Fig. 2 zeigt Mikrofotos von der Probenmitte und dem Randbereich eines PET-Chips nach einem 2-stufigen Kristallisationsverfahren nach dem Stand der Technik.

Fig. 3    zeigt Mikrofotos von entsprechenden Stellen eines PET-Chips, der nach einer solchen Kristallisation in einem Standard-SSP-Reaktor weiterbehandelt wurde.

Fig. 4    zeigt Mikrofotos von entsprechenden Stellen eines erfindungsgemäßen PET- Chips, der aus einem Latentwärmekristallisationsverfahren erhalten wurde.

Variante A:

Nach dem erfindungsgemäßen Verfahren wird das latentwärmekristallisierte Granulat, das eine Temperatur > 100 °C, bevorzugt mindestens 115°C, besonders bevorzugt mindestens 130°C, eine I.V. von mehr als 0,53 dl/g, einen Kristallisationsgrad von mehr als 38 % und einen Acetaldehydgehalt zwischen 20 und 70 ppm, bevorzugt zwischen 20 und 55 ppm aufweist, über eine Fördereinrichtung kontinuierlich und gegebenenfalls über ein Zwischenlagerungssilo direkt in den SSP-Reaktor zur Erhöhung der Kettenlänge des Polymers sowie zur Reduktion des AA-(Acetaldehyd-) Gehaltes gefördert. Das so hergestellte PET-Granulat entspricht den Marktanforderungen mit Kristallisationsgraden < 60 %, bevorzugt < 55 %, HOF-Werten < 60 kJ/kg und Acetaldehydgehalten unter 1 ppm. Die I.V.-Einstellung wird den jeweiligen Einsatzgebieten angepasst.

Da die Temperatur des Granulates bei Eintritt in den SSP-Reaktor deutlich unter den üblichen Werten von Standardkristallisationsanlagen mit 160 - 210 °C liegen, wird entweder die übliche Verweilzeit von 8-18 Stunden um 10% erhöht oder die SSP-Temperatur um 2-3 K gegenüber der üblichen Temperatur bei Standardanlagen angehoben oder beide Möglichkeiten werden kombiniert. Da die üblichen Zwischenlagerungen und Kristallisationsstufen mit den entsprechenden Betriebskosten weggelassen werden können und eine entsprechende Teilwärme aus der Granulation, die eigentlich noch aus der Schmelze vor der Kristallisation stammt, bis zum SSP-Reaktor erhalten bleibt, bietet dieses Verfahren einen deutlichen ökonomischen Vorteil. Aus diesem erfindungsgemäßen Verfahren erhält man außerdem eine ausgesprochen gleichmäßige Granulatqualität von Chip zu Chip und ebenso innerhalb eines Chips, was zu einer einfacheren und sichereren Verarbeitung zu Preforms und Flaschen führt, da beispielsweise das Aufschmelzverhalten aller Chips im Gegensatz zu Produkten nach dem Stand der Technik wesentlich einheitlicher ist.

Variante B:

Nach dem erfindungsgemäßen Verfahren wird in einer sich anschließenden Dealdehydisierungsstufe (DAH) der Acetaldehydgehalt des latentwärmekristallisierten Granulates aus Hochviskos-("DHI") Polykondensationsanlagen, das eine Temperatur > 100 °C, bevorzugt mindestens 115°C, besonders bevorzugt mindestens 135°C, eine I.V. von mehr als 0,65 dl/g, einen Kristallisationsgrad von mehr als 38 % und einen Acetaldehydgehalt zwischen 20 und 100 ppm, bevorzugt zwischen 30 und 60 ppm aufweist, reduziert und gegebenenfalls die I.V. erhöht. In dieser Stufe wird, wie beispielsweise in der deutschen Patentanmeldung DE 102004010680.0 beschrieben, bei Temperaturen zwischen 190 - 220 °C über eine Verweilzeit von mindestens 5 Stunden unter geringer mechanischer Störung und mit Stickstoff als Trägergas mit einem gezielt ausgewählten Taupunkt s- 10°C der AA-Gehalt auf < 1 ppm reduziert und gegebenenfalls die I.V. des Granulates entsprechend dem späteren Einsatzgebiet eingestellt. Die I.V. kann dabei unverändert bleiben oder um bis zu 0,1 dl/g angehoben werden. Das so hergestellte Granulat hat einen AA-Gehalt <1 ppm und einen Kristallisationsgrad < 55%. Die HOF-Werte liegen bei < 55 kJ/kg. Die Kristalistrukturen sind gegenüber dem Granulat aus Standardprozessen sehr viel aufgelockerter und somit einfacher und energiesparender in der Preformherstellung einsetzbar. Die Acetaldehydrückbildungswerte liegen bei optimalen Maschineneinstellungen um bis zu 15 % unter den Standardwerten. Diese Technologie hat zusätzlich den Vorteil sowohl der Equipment- als auch der Energieeinsparung.

Variante C:

Nach dem erfindungsgemäßen Verfahren wird durch den Zusatz von marktüblichen acetaldehydreduzierenden Additiven oder Thermostabilisatoren vor und/oder nach dem Schmelzepolykondensationsreaktor und/oder direkt vor der Granulierung in die Schmelze eine Polyesterqualität erzeugt, die (ggf. über eine Einrichtung zum Kühlen des Granulates) direkt zur Weiterverarbeitung, beispielsweise zur Herstellung von Hohlkörpern, eingesetzt werden kann.

Das so hergestellte Granulat hat einen Kristallisationsgrad von mehr als 38 % und einen Acetaldehydgehalt von 0,5 bis 8 ppm, bevorzugt von 0,5 bis 3 ppm, besonders bevorzugt von 0,5 bis 1 ppm. Die I.V. des Granulates ist entsprechend dem späteren Einsatzgebiet mindestens 0.68 dl/g.

PET-Granulate zur Herstellung von Hohlkörpern werden oft nicht direkt beim Verarbeiter hergestellt. Während Verpackung und Transport können sie daher Feuchtigkeit aus der Luft aufnehmen und müssen daher unmittelbar vor dem Aufschmelzen zur Preformherstellung getrocknet werden. Der Verarbeiter kann dieses Granulat mit verhältnismäßig niedrigem Kristallisationsgrad direkt ohne Verklebungsneigung in seinem Trockner vor der Preformherstellung bei den üblichen Trocknungsparametem zwischen 160 und 180 °C unter Luftstrom über eine Zeit von 4 bis 6 Stunden trocknen.

Aufgrund der sehr viel lockereren Kristallstruktur des erfindungsgemäßen latentwärmekristallisierten Granulates erfordert dieser Aufschmelzvorgang in der Preformmaschine einen wesentlich geringeren Energieeinsatz, wodurch der Abbau des PET und somit die AA-Rückbildung niedriger ausfällt und die für Preforms geforderten Acetaldehydgehalte < 8 ppm ohne weiteres eingehalten werden können.

Die Erfindung wird nunmehr anhand einiger, die Erfindung in keiner Weise beschränkender Ausführungsbeispiele näher beschrieben. Die angegebenen Eigenschaftswerte wurden hierbei wie folgt ermittelt:

Die Intrinsic-Viskosität (I.V.) wurde bei 25 °C an einer Lösung von 500 mg Polyester in 100 ml eines Gemisches aus Phenol und 1,2-Dichlorbenzol (3:2 Gew.-Teile) gemessen.

Der Acetaldehydgehalt (AA) wurde bestimmt, indem der Acetaldehyd durch Erhitzen in einem geschlossenen Gefäß aus Polyester ausgetrieben wurde und der Acetaldehyd im Gasraum des Gefäßes gaschromatographisch mit dem Head space-Injektionssystem H540 von Perkin Elmer, Trägergas: Stickstoff; Säule: 1,5 m Edelstahl; Füllung: Poropack Q, 80-100 mesh; Probemenge: 2g; Heiztemperatur: 150 °C. Heizdauer: 90 min. bestimmt wurde.

Zur Bestimmung des Kristallisationsgrades $\alpha$ (= KTG) wird dreimal die Dichte $\rho$ von 30 Chips in einem Dichtegradienten mit einem Tetrachlorethan/Heptan-Gemisch bei 23 °C ermittelt und berechnet nach

$$\alpha = \frac{\rho_c\,(\rho - \rho_a)}{\rho\,(\rho_c - \rho_a)}$$

wobei

die Dichte von 100 % kristallinem PET: $\rho_c$ = 1,455 und

die Dichte von amorphem PET: $\rho_a$ = 1,332 ist.

Die Ermittlung der Schmelzenthalpie ("Heat of Fusion"; HOF) erfolgte in einem DSC-Gerät der Fa. Mettler entsprechend der ASTM E 793 der American Society for Testing of Materials mit einer Heizrate von 50 K / min von 100 auf 200 °C, 5 min Halten auf dieser Temperatur und anschließend mit einer Heizrate von 10 K / min bis auf 300 °C; die verbrauchte Energie in kJ/kg zu bestimmen ist.

Zur Aufnahme der Mikrobilder die Chips kalt eingebettet und am Mikrotom auf 10 $\mu$m Stärke geschnitten. Die Bilder wurden am Lichtmikroskop im Polarisationskontrast erstellt. Detailaufnahmen wurden vom Probenrand und Mitte jeweils mit einem 10er, 20er und 40er Objektiv aufgenommen

Beispiele

Alle Beispiele wurden mit kugel- bis linsenförmigem Granulat mit einer durchschnittlichen Masse von 15,5 mg durchgeführt. Der Polyester aus dem letzten Schmelzepolykondensationsreaktor hatte folgende Comonomerzusammensetzung: Comonomer: 2 Gew.% Isophthalsäure (IPA); Diethylenglykolgehalt: 1,4 Gew.%.

Der Katalysatorgehalt betrug 200 ppm Sb in Vergleichsbeispiel 1 und 230 ppm Sb in den Beispielen 2-4.

Vergeichsbeispiel 1

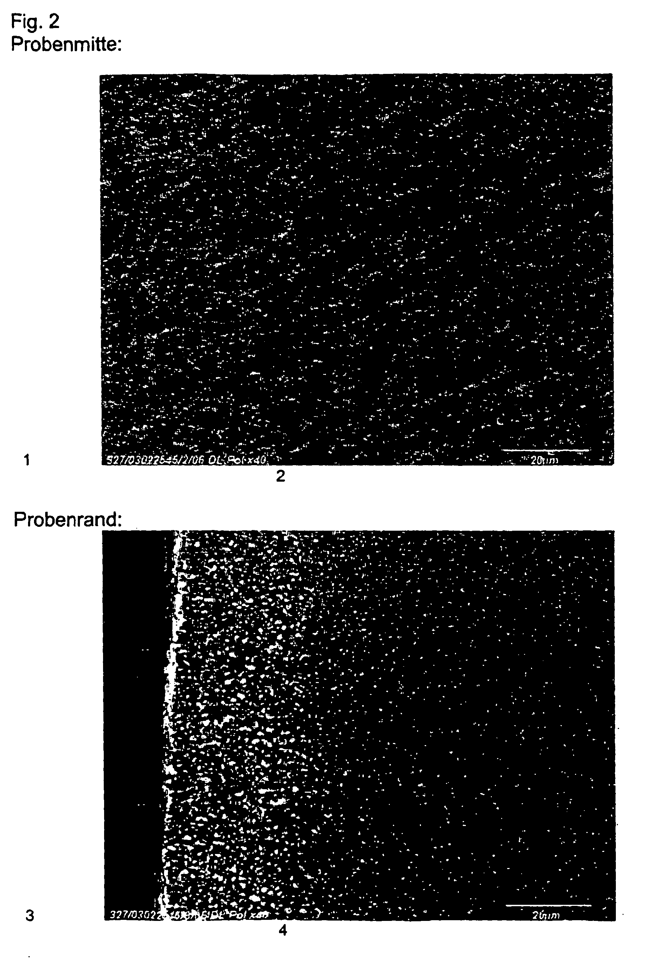

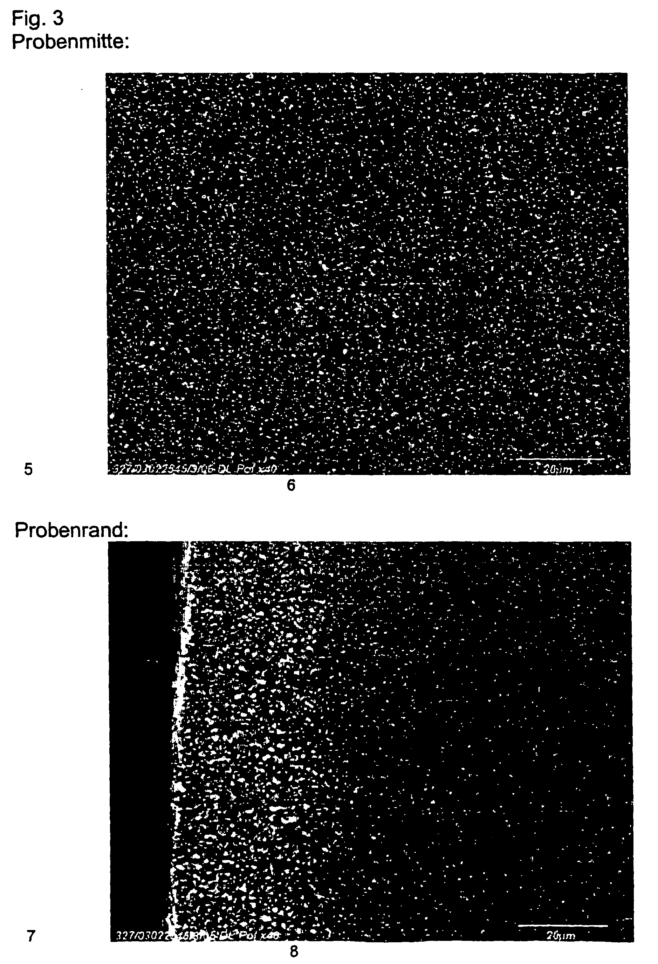

Im Beispiel 1 wurden amorphe Chips mit einer I.V. von 0,61 dl/g aus dem Schmelzepolykondensationsverfahren zur Herstellung von leicht modifiziertem PET für die Befüllung von Süßgetränken kristallisiert und festphasenpolykondensiert. Dabei wurden in einem herkömmlichen Unterwassergranulator vom Typ AH 2000 der Fa. BKG Chips mit folgenden Eigenschaften hergestellt: I.V. = 0,61 dl/g, AA-Gehalt = 40 ppm, KTG = 8 %. In einer ersten Kristallisationsstufe, einem Wirbelbettkristallisator mit einer Verweilzeit (VWZ) von 60 min und einer Temperatur von 200°C wurden Chips mit folgenden Eigenschaften erhalten: I.V. = 0,62 dl/g, AA-Gehalt = 12,3 ppm, KTG = 46,1 %. In einer zweiten Kristallisationsstufe, einem Schachtkristallisator mit einer VWZ von 180 min und einer Temperatur von 215°C wurden folgende Chips erhalten: I.V. = 0,63 dl/g, AA-Gehalt = 8,8 ppm, KTG = 53,1 %. Mikrofotos dieser Chips sind in Figur 2 gezeigt. Diese Chips sind vergleichbar mit dem Eingangsmaterial der Beispiele 2 bis 4 und daher in der Tabelle aufgeführt. Sie wurden in einen Standard-SSP-Reaktor gefördert (Trägergas: Stickstoff mit Taupunkt -75 °C). Die Temperatur im SSP-Reaktor wurde auf 207,5 °C eingestellt, die Verweilzeit betrug 12 Stunden. Mikrofotos dieser Chips sind in Figur 3 gezeigt. Die Ergebnisse des Beispiels 1 werden in der Tabelle dargestellt.

In den Beispielen 2- 4 wurden Chips, die nach der Latentwärmekristallisation hergestellt wurden, eingesetzt und weiterverarbeitet.

Beispiel 2 (Variante A):

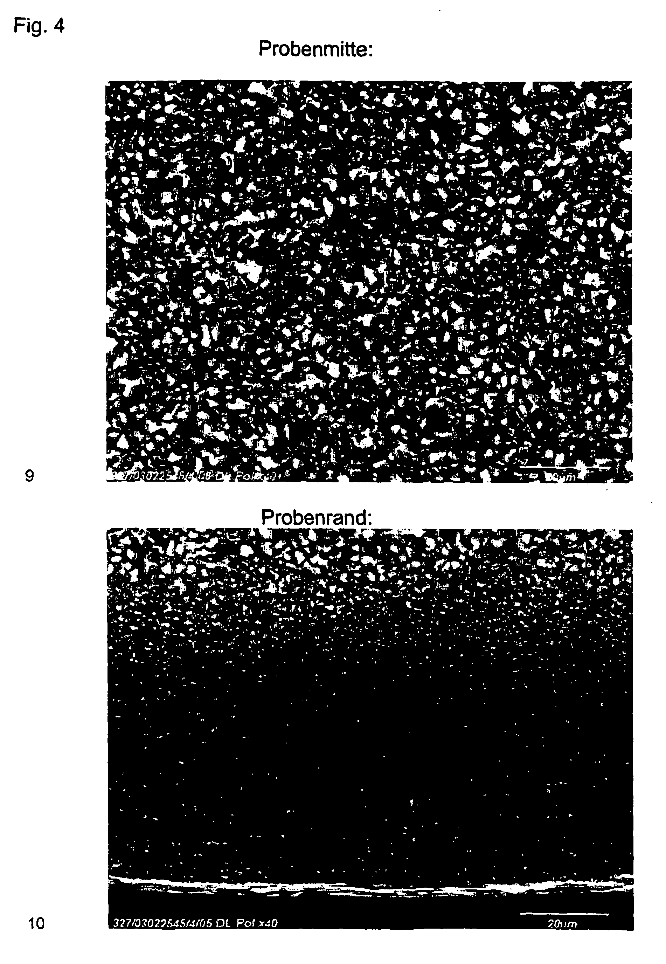

Es wurde auf die beiden Kristallisationsstufen verzichtet. Das aus der Latentwärmekristallisation kommende 140 °C warme Granulat (Mikrofotos dieser Chips siehe Figur 4), wurde über eine geeignete Fördereinrichtung ohne Zwischenlagerung direkt in den Standard-SSP-Reaktor gefördert (Trägergas: Stickstoff mit Taupunkt -75 °C). Die Temperatur im SSP-Reaktor wurde auf 210 °C eingestellt, die Verweilzeit betrug 12 Stunden.

Beispiel 3 (Variante B):

Das aus der Latentwärmekristallisation kommende 140 °C warme Granulat wurde über eine geeignete Fördereinrichtung ohne Zwischenlagerung oder zwischenzeitliche Abkühlung in eine Festphasendealdehydisierungsstufe (DAH) gefördert (Trägergas: Stickstoff mit Taupunkt -30 °C). Die Temperatur in der Festphasendealdehydisierungsstufe wurde auf 213 °C eingestellt, die Verweilzeit betrug 6,7 Stunden.

Beispiel 4 (Variante C):

Dem Schmelzestrom wurden erfindungsgemäß zu einem Zeitpunkt von 120 Sekunden vor der Latentwärmekristallisation 1500 ppm eines kommerziell verfügbaren Acetaldehydreduzierenden Additivs der Fa. Color Matrix als Suspension zugemischt. Das von der Latentwärmekristallisation kommende 140 °C warme Granulat wurde auf ca. 50 °C abgekühlt und einer Weiterverarbeitung zu Preforms zugeführt. Vor der Preformherstellung wurde das Granulat unter den üblichen Trocknungsbedingungen (170 °C, 5 Stunden) in einem Standardlufttrockner getrocknet. Es wurden keine Verklebungen festgestellt. Die Preforms wurden in einer Preformmaschine LX 160 P von Husky mit 2 Kavitäten hergestellt. Der AA-Gehalt in den Preforms betrug 7 ppm. Tabelle:

| Beispiel | | 1 | 2 | 3 | 4 |
|---|---|---|---|---|---|
| Eingangsmaterial | I.V. [dl/g] | 0,63 | 0,60 | 0,74 | 0,80 |
| | AA [ppm] | 8,8 | 41 | 43 | 1,0 |
| | KTG [%] | 53.1 | 42,0 | 42,0 | 42,0 |
| | HOF [kJ/kg] | - | 41,6 | 43,8 | 42,7 |
| Weiterverarbeitungsbedingungen | Variante | Vergleich (SSP-Reaktor) | A (SSP-Reaktor) | B (DAH) | C (direkt) |
| | VWZ [h] | 12 | 12 | 6,7 | 0 |
| | T [°C] | 207,5 | 210 | 213 | 0 |
| | $\Delta$ I.V. [dl/g] | 0,19 | 0,20 | 0,06 | 0 |
| Endprodukt | I.V. [dl/g] | 0,80 | 0,80 | 0,80 | - |
| | AA [ppm] | 0,5 | 0,8 | 0,9 | - |
| | KTG [%] | 55,2 | 51,5 | 50,0 | - |
| | HOF [kJ/kg] | 58,6 | 52,0 | 52,0 | - |

**Patentansprüche**

1. Polyester- oder Copolyester-Granulat, hergestellt aus einer Polymerschmelze, **dadurch gekennzeichnet, dass** das Granulat bis zum Erreichen eines Kristalüsationsgrades von mindestens 38% kristallisiert wurde, wobei dies **dadurch** bewerkstelligt wurde, dass der Wärmeverlust des Granulats nach der Granulation bei Transport und Trocknung so niedrig gehalten wurde, dass die Kristallisation unter Nutzung der bewahrten Eigenwärme aus dem Schmelzezustand des Polymers erfolgte.

2. Polyester- oder Copolyester-Granulat nach Anspruch 1, **dadurch gekennzeichnet, dass** die mit einem Lichtmikroskop im Polarisationskontrast sichtbaren Sphärolithe in der äußersten Schicht des Granulatkornes kleiner sind als im Zentrum des Granulatkornes.

3. Polyester- oder Copolyester-Granulat nach Anspruch 1, **dadurch gekennzeichnet, dass** es eine intrinsische Viskosität von mindestens 0,53 dl/g aufweist.

4. Polyester- oder Copolyester-Granulat nach Anspruch 1, **dadurch gekennzeichnet, dass** der Acetaldehydgehalt zwischen 0,5 und 100 ppm, bevorzugt zwischen 0,5 und 70 ppm, ganz besonders bevorzugt zwischen 0,5 und 60 ppm liegt.

5. Polyester- oder Copolyester-Granulat nach Anspruch 1, **dadurch gekennzeichnet, dass** es eine Schmelzenthalpie von unter 50 kJ/kg aufweist.

6. Verwendung eines Polyester- oder Copolyester-Granulats nach den Ansprüchen 1 bis 5 mit einem Acetaldehydgehalt zwischen 20 und 70 ppm, bevorzugt zwischen 20 und 55 ppm zur Festphasenpolykondensation (SSP).

7. Verwendung nach Anspruch 6, wobei das Polyester- oder Copolyester-Granulat vor Eintritt in die Festphasenpolykondensation (SSP) eine intrinsische Viskosität von mindestens 0,53 dl/g aufweist.

8. Verwendung nach Anspruch 6, wobei das Polyester oder Copolyester-Granulat zwischen der Kristallisation und der Festphasenpolykondensation (SSP) an der Oberfläche stets eine Temperatur von mindestens 100°C, bevorzugt mindestens 115°C, besonders bevorzugt von mindestens 135°C aufweist.

9. Verwendung nach Anspruch 6, wobei die Schmelzenthalpie des Granulates nach der Festphasenpolykondensation (SSP) <60 kJ/kg, bevorzugt <55 kJ/kg ist.

10. Verwendung eines Polyester- oder Copolyester-Granulats nach den Ansprüchen 1 bis 5 mit einem Acetaldehydgehalt zwischen 20 und 100 ppm, bevorzugt zwischen 30 und 60 ppm, zur Festphasendealdehydisierung (DAH).

11. Verwendung nach Anspruch 10, wobei das Polyester- oder Copolyester-Granulat vor der Festphasendealdehydisierung (DAH) eine intrinsische Viskosität von mindestens 0,65 dl/g aufweist.

12. Verwendung nach Anspruch 10, wobei das Polyester- oder Copolyester-Granulat zwischen der Kristallisation und der Festphasendealdehydisierung (DAH) an der Oberfläche stets eine Temperatur von mindestens 100°C, bevorzugt mindestens 115°C, besonders bevorzugt von mindestens 135°C aufweist.

13. Verwendung nach Anspruch 10, wobei die Schmelzenthalpie des Granulates nach der Festphasendealdehydisierung (DAH) <55 kJ/kg ist.

14. Verwendung eines Polyester- oder Copolyester-Granulats nach den Ansprüchen 1 bis 5, der beim Eintritt in die Formgebungseinheit einen Kristallisationsgrad von mehr als 38%, einen Acetaldehydgehalt von 0,5 bis 3ppm, bevorzugt 0,5 bis 1 ppm sowie eine Schmelzenthalpie unter 50 kJ/kg aufweist, zur direkten Herstellung von Formkörpern.

15. Verfahren zur Herstellung eines Granulats gemäß den Ansprüchen 1 bis 5 aus einer in einem kontinuierlichen oder diskontinuierlichen Schmelzepolykondensationsreaktor erzeugten Polyester oder Copolyesterschmelze mit hoher intrinsischer Viskosität, **dadurch gekennzeichnet, dass** aus der Polymerschmelze ein Granulat hergestellt wird, welches bis zum Erreichen eines Kristallisationsgrades von >38% kristallisiert wird, wobei dies **dadurch** bewerkstelligt wird, dass der Wärmeverlust des Granulats nach der Granulation bei Transport und Trocknung so niedrig gehalten wird, dass die Kristallisation unter Nutzung der bewahrten Eigenwärme aus dem Schmelzezustand des Polymers erfolgt, wobei das Granulat nach der Kristallisation einen Acetaldehydgehalt zwischen 0,5 und 100 ppm , bevorzugt zwischen 0,5 und 70 ppm, besonders bevorzugt zwischen 0,5 und 60 ppm aufweist.

**Claims**

1. A polyester or copolyester granulate, produced from a polymer melt, **characterised in that** the granulate has been crystallised until a degree of crystallisation of at least 38% has been reached, this being brought about by the fact that the heat loss of the granulate after granulation during transport and drying is kept so low that the crystallisation takes place using the retained inherent heat from the molten state of the polymer.

**2.** The polyester or copolyester granulate according to claim 1, **characterised in that** the spherulites visible with a light-optical microscope in polarisation contrast are smaller in the outermost layer of the granulate core than in the centre of the granulate core.

**3.** The polyester or copolyester granulate according to claim 1, **characterised in that** it has an intrinsic viscosity of at least 0.53 dl/g.

**4.** The polyester or copolyester granulate according to claim 1, **characterised in that** the acetaldehyde content lies between 0.5 and 100 ppm, preferably between 0.5 and 70 ppm, very particularly preferably between 0.5 and 60 ppm.

**5.** The polyester or copolyester granulate according to claim 1, **characterised in that** it has a melt enthalpy of less than 50 kJ/kg.

**6.** Use of a polyester or copolyester granulate according to claims 1 to 5 with an acetaldehyde content between 20 and 70 ppm, preferably between 20 and 55 ppm for the solid-phase polycondensation (SSP).

**7.** The use according to claim 6, wherein the polyester or copolyester granulate has an intrinsic viscosity of at least 0.53 dl/g before entry into the solid-phase polycondensation (SSP).

**8.** The use according to claim 6, wherein the polyester or copolyester granulate between the crystallisation and the solid-phase polycondensation (SSB) always has a temperature at the surface of at least 100°C, preferably of at least 115°C, particularly preferably of at least 135°C.

**9.** The use according to claim 6, wherein the melt enthalpy of the granulate after the solid-phase polycondensation (SSB) is <60 kJ/kg, preferably <55 kJ/kg.

**10.** The use of a polyester or copolyester granulate according to claims 1 to 5 with an acetaldehyde content between 20 and 100 ppm, preferably between 30 and 60 ppm, for the solid-phase dealdehydisation (DAH).

**11.** The use according to claim 10, wherein the polyester or copolyester granulate has an intrinsic viscosity of at least 0.65 dl/g before the solid-phase dealdehydisation (DAH).

**12.** The use according to claim 10, wherein the polyester or copolyester granulate between the crystallisation and the solid-phase dealdehydisation (DAH) always has a temperature at the surface of at least 100°C, preferably of at least 115°C, particularly preferably of at least 135°C.

**13.** The use according to claim 10, wherein the melt enthalpy of the granulate after the solid-phase dealdehydisation (DAH) is <55 kJ/kg.

**14.** The use of a polyester or copolyester granulate according to claims 1 to 5, which upon entry into the shaping unit has a degree of crystallisation of more than 38%, an acetaldehyde content of 0.5 to 3 ppm, preferably 0.5 to 1 ppm, and a melt enthalpy less than 50 kJ/kg, for the direct production of shaped bodies.

**15.** A method for the production of a granulate according to claims 1 to 5 from a polyester or copolyester melt with a highly intrinsic viscosity produced in a continuous or discontinuous melt polycondensation reactor, **characterised in that** a granulate is produced from the polymer melt, said granulate being crystallised until a degree of crystallisation of > 38% is reached, this being brought about by the fact that the heat loss of the granulate after the granulation during transport and drying is kept so low that the crystallisation takes place using the retained inherent heat from the molten state of the polymer, wherein the granulate after crystallisation has an acetaldehyde content between 0.5 and 100 ppm, preferably between 0.5 and 70 ppm, particularly preferably between 0.5 and 60 ppm.

**Revendications**

**1.** Granules de polyester ou de copolyester, produites à partir d'une masse polymère fondue, **caractérisées en ce que** les granules ont été cristallisées jusqu'à l'obtention d'un taux de cristallisation d'au moins 38%, ceci ayant été réalisé **en ce que** la perte de chaleur des granules après la granulation a été maintenue lors du transport et du séchage à une valeur aussi faible que la cristallisation s'est effectuée sous exploitation de la propre chaleur conservée, à partir de l'état de masse fondue du polymère.

2. Granules de polyester ou de copolyester selon la revendication 1, **caractérisées en ce que** les sphérolithes visibles à l'aide d'un microscope optique en contraste par polarisation dans la couche extérieure des grains de granules sont plus petites qu'au coeur des grains de granules.

3. Granules de polyester ou de copolyester selon la revendication 1, **caractérisées en ce qu'**elles présentent une viscosité intrinsèque de 0,53 dl/g.

4. Granules de polyester ou de copolyester selon la revendication 1, **caractérisées en ce que** la teneur en aldéhyde éthylique se situe entre 0,5 et 100 ppm, de préférence entre 0,5 et 70 ppm, de façon particulièrement préférée entre 0,5 et 60 ppm.

5. Granules de polyester ou de copolyester selon la revendication 1, **caractérisées en ce que**lles présentent une enthalpie de fusion inférieure à 50 kJ/kg.

6. Utilisation de granules de polyester ou de copolyester selon les revendications 1 à 5, avec une teneur en aldéhyde éthylique comprise entre 20 et 70 ppm, de préférence comprise entre 20 et 55 ppm pour la polycondensation en phase solide (SSP).

7. Utilisation selon la revendication 6, les granules de polyester ou de copolyester présentant, avant l'intervention de la polycondensation en phase solide (SSP) une viscosité intrinsèque d'au moins 0,53 dl/g.

8. Utilisation selon la revendication 6, les granules de polyester ou de copolyester présentant en surface, entre la cristallisation et la polycondensation en phase solide (SSP) toujours une température d'au moins 100°C, de préférence d'au moins 115°C, de façon particulièrement préférée d'au moins 135°C.

9. Utilisation selon la revendication 6, l'enthalpie de fusion des granules après la polycondensation en phase solide (SSP) étant <60 kJ/kg, de préférence <55 kJ/kg.

10. Utilisation de granules de polyester ou de copolyester selon les revendications 1 à 5 avec une teneur en aldéhyde éthylique comprise entre 20 et 100 ppm, de préférence comprise entre 30 et 60 ppm, pour la déaldéhydisation en phase solide (DAH).

11. Utilisation selon la revendication 10, les granules de polyester ou de copolyester présentant avant la déaldéhydisation en phase solide (DAH) une viscosité intrinsèque d'au moins 0,65 dl/g.

12. Utilisation selon la revendication 10, les granules de polyester ou de copolyester présentant en surface entre la cristallisation et la déaldéhydisation en phase solide (DAH) toujours une température d'au moins 100°C, de préférence d'au moins 115°C, de façon particulièrement préférée d'au moins 135°C.

13. Utilisation selon la revendication 10, l'enthalpie de fusion des granules après la déaldéhydisation en phase solide (DAH) étant <55 kJ/kg.

14. Utilisation de granules de polyester ou de copolyester selon les revendications 1 à 5, qui à l'entrée dans l'unité de façonnage présentent un taux de cristallisation supérieur à 38%, un taux d'aldéhyde éthylique de 0,5 à 3 ppm, de préférence de 0,5 à 1 ppm ainsi qu'une enthalpie de fusion inférieure à 50 kJ/kg pour la fabrication directe de corps moulés.

15. Procédé de production de granules selon les revendications 1 à 5 à partir d'une masse fondue de polyester ou de copolyester à haute viscosité intrinsèque, créée à partir d'un réacteur continu ou discontinu de polycondensation de masse fondue, **caractérisé en ce qu'**à partir de la masse polymère fondue, sont produites des granules qui sont cristallisées jusqu'à l'atteinte d'un taux de cristallisation de >38%, ceci étant réalisé **en ce que** la perte de chaleur des granules après la granulation a été maintenue lors du transport et du séchage à une valeur aussi faible que la cristallisation s'est effectuée sous exploitation de la propre chaleur conservée, à partir de l'état de masse fondue du polymère, les granulés présentant après la cristallisation un taux d'aldéhyde éthylique compris entre 0,5 et 100 ppm, de préférence compris entre 0,5 et 70 ppm, de façon particulièrement préférée compris entre 0,5 et 60 ppm.

Fig. 1

**Einsatz der Latentwärmekristallisation für verschiedene Polyestertechnologien**

A    | Standard Polykondensation | ⟶   | GK | ⟶ | SSP | ⟶   Endprodukt

B    | DHI Polykondensation | ⟶   | GK | ⟶ | DAH | ⟶   Endprodukt

Additive

C    | DHI Polykondensation | ⟶   | GK | ⟶   Endprodukt

Standard Polykondensation I.V. > 0,53 dl/g
DHI Polykondensation I.V. > 0,68 dl/g
GK   Granulator/Kristallisator
SSP   Festphasenpolykondensation
DAH   Dealdehydisierungsstufe in der festen Phase

Fig. 2
Probenmitte:

1

2

Probenrand:

3

4

Fig. 3
Probenmitte:

Probenrand:

## Fig. 4

### Probenmitte:

### Probenrand:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4314162
- DE 3541500
- DE 19914116
- EP 0432427 A
- DE 3702841
- US 4436782 A
- WO 0181450 A
- WO 0105566 A
- DE 10349016
- DE 102004010680